# EUROPÄISCHE PATENTSCHRIFT

(11) **EP 3 087 013 B1**
(45) Veröffentlichungstag und Bekanntmachung des Hinweises auf die Patenterteilung: **07.03.2018**
(21) Anmeldenummer: 14806528.7
(22) Anmeldetag: 13.10.2014
(51) Int. Cl.: B65D 81/32

(54) **MISCHBEHÄLTER MIT ZUM MISCHEN VON PRODUKTKOMPONENTEN VERDREH- UND/ODER VERSCHIEBBAREN BEHÄLTERTEILEN**
MIXING CONTAINER COMPRISING ROTATABLE AND/OR MOVABLE CONTAINER PARTS FOR MIXING PRODUCT CONSTITUENTS
RÉCIPIENT DE MÉLANGE AVEC ÉLÉMENTS DE RÉCIPIENT APTES À TOURNER ET/OU COULISSER POUR MÉLANGER DES COMPOSANTS DE PRODUIT

(30) Priorität: 27.12.2013 DE 202013011600 U
(43) Veröffentlichungstag der Anmeldung: 02.11.2016
(73) Patentinhaber: 2KIQ Beverages GmbH, 86153 Augsburg (DE)
(72) Erfinder: LANG, Peter, 86660 Tapfheim (DE); NEUMANN, Alexander, 86153 Augsburg (DE)
(74) Vertreter: Wiedemann, Markus
(86) Internationale Anmeldenummer: PCT/DE2014/000503
(87) Internationale Veröffentlichungsnummer: WO 2015/096825

(56) Entgegenhaltungen:
- WO-A2-00/29305
- GB-A- 2 067 162
- GB-A- 2 220 930
- US-A- 4 779 722

## Beschreibung

Die Erfindung betrifft einen Mischbehälter, der mehrere Kammern für verschiedene zur Fertigstellung eines Mischprodukts mischbare Komponenten aufweist, sowie ein Mischsystem, das einen Mischbehälter beinhaltet.

US 2008/0 078 200 A1 offenbart eine mehrteilige Trinkflasche mit zwei voneinander lösbaren Kammern und einem Deckelteil. In einer ersten Kammer befindet sich eine Getränkekomponente, und in einer zweiten Kammer wird ein Zuschlagstoff gehalten. Eine Bodenplatte der zweiten Kammer weist wenigstens eine Öffnung auf. Eine gegen die Bodenplatte der zweiten Kammer verdrehbare Drehplatte in der zweiten Kammer weist wenigstens eine entsprechende Öffnung auf. An einer ersten Position der Drehplatte sind die wenigstens eine Öffnung in der Drehplatte und der Bodenplatte zumindest teilweise in Überdeckung und stellen einen die erste und die zweite Kammer verbindenden Durchlass her, über welchen sich Zuschlagstoff und Getränkekomponente vermischen. In einer zweiten Position der Drehplatte sind die Öffnungen überdeckungsfrei gegeneinander versetzt und trennen erste und die zweite Kammer durchlassfrei voneinander. Der Aufbau der Trinkflasche ist aufwendig und teuer, da der zerlegbar mehrteilige Aufbau eine aufwändige Mitnehmeranordnung bedingt. Außerdem kann nicht sichergestellt werden, dass sich Getränkekomponente und Zuschlagstoff nicht unbeabsichtigt vermischen und/oder sich optimal vermischen, weil der Öffnungszustand des Durchlasses von außen nicht erkennbar ist.

JP 07 010 172 A beschreibt ebenfalls einen Behälter zum Mischen zweier Substanzen, mit einem Behälterkörper zur Aufnahme einer Lösung, einem Deckelkörper zur Aufnahme eines Zuschlagstoffs, welcher über einem Halsabschnitt des Behälterkörpers platziert ist und einen ersten Mitnehmer aufweist, einem ersten inneren Verschluss, welcher mit dem Halsabschnitt in Eingriff steht und eine erste Öffnung in einer ersten Bodenfläche aufweist, und einem zweiten inneren Verschluss, welcher eine zweite Öffnung in einer zweiten Bodenfläche und einen zweiten Mitnehmer aufweist, der mit dem ersten Mitnehmer in Eingriff steht. Bei einem Öffnen des Mischbehälters durch Drehen des Deckelkörpers wirken der erste und der zweite Mitnehmer derart zusammen, dass die erste Öffnung und die zweite Öffnung in Überdeckung gebracht werden und ein Durchlass zwischen dem Deckelkörper und dem Behälterkörper hergestellt wird, über welchen sich Zuschlagstoff und Lösung vermischen. Weil der Zuschlagstoff in einer Ausnehmung des Deckelkörpers aufgenommen ist und dieser wiederum in den Halsbereich des Behälterkörpers eingesetzt ist, ist die Menge des zumischbaren Zuschlagstoffs bei üblichen Gebindegrößen dieser Art äußerst begrenzt.

WO 00/29305 A2 offenbart einen Mehrkomponentenbehälter mit einem Außenbehälter für eine erste Komponente und einem Innenbehälter für mindestens eine zweite Komponente, wobei mittels einer Dreheinrichtung der Innenbehälter zum Außenbehälter geöffnet wird zwecks Vermischung der Komponenten. Zum Öffnen des Innenbehälters mittels der Dreheinrichtung ist eine Mantelwandung mit mindestens einer von oben nach unten verlaufenden Sollbruchzone vorgesehen. GB 2 067 162 A beschreibt ebenfalls einen Mehrkomponentenbehälter.

### Aufgabe der Erfindung

Der Erfindung liegt demgegenüber die Aufgabe zugrunde, einen Mischbehälter der eingangs erwähnten Art derart weiter zu bilden, dass sich eine bessere Durchmischung der mischbaren Komponenten bei insgesamt optisch ansprechender Gestaltung ergibt.

Diese Aufgabe wird durch die Merkmale des Patentanspruchs 1 gelöst.

### Offenbarung der Erfindung

Erfindungsgemäß ist vorgesehen, dass
- wenigstens eine erste Kammer zur Aufnahme einer ersten Komponente des Mischprodukts in einem ersten Behälterteil und wenigstens eine zweite Kammer zur Aufnahme der ersten Komponente des Mischprodukts in einem zweiten Behälterteil und eine dritte Kammer zur Aufnahme wenigstens einer zweiten Komponente des Mischprodukts angeordnet ist,
- das erste Behälterteil und das zweite Behälterteil durch Relativdrehung zueinander in eine Mischposition schwenk- und/oder drehbar sind, in der zum Mischen der Komponenten eine Verbindung zwischen der ersten Kammer und der zweiten Kammer und der dritten Kammer hergestellt ist, wobei
- der Mischbehälter durch einen rotationssymmetrischen Körper gebildet wird, wobei eine Drehachse senkrecht zur Längsmittelachse des rotationssymmetrischen Körpers angeordnet ist, wobei
- ein an wenigstens einer Behälterteilwandung festgelegtes, in sich verformbares Komponentenleitelement vorgesehen ist, wobei
- das in sich verformbare Komponentenleitelement durch Verdrehung um die Drehachse des rotationssymmetrischen Körpers verformbar ist, und wobei
- das Komponentenleitelement an wenigstens einer Behälterteilwandung festgelegt ist, die sich senkrecht zu dieser Drehachse erstreckt, und wobei
- das Komponentenleitelement die dritte und im Ausgangszustand geschlossene Kammer ausbildet, im Inneren des Mischbehälters koaxial zu dessen Drehachse liegend angeordnet und an einer Wandung des ersten Behälterteils und einer Wandung des zweiten Behälterteils verdrehfest festgelegt ist, und wobei
- das Komponentenleitelement dazu angeordnet ist, in einer Ausgangsposition die erste Kammer und die zweite Kammer einerseits und die dritte Kammer andererseits komponentendicht voneinander zu trennen und sich bei der Relativdrehung des ersten Behälterteils und des zweiten Behälterteils in die Mischposition durch Verformung seiner Umfangswandung zu öffnen und die erste Kammer und die zweite Kammer einerseits und die dritte Kammer andererseits komponentendurchlässig zu verbinden.

Das in sich verformbare Komponentenleitelement ist an einem ersten von Enden des Komponentenleitelements an der Wandung des ersten Behälterteils festgelegt und an einem zweiten Ende an der Wandung des zweiten Behälterteils festgelegt. Als solches ist es insoweit innenseitig der von außen zugänglichen Wandungen des Mischbehälters angeordnet.

In einer Ausgangsposition, in der keine Durchmischung der Komponenten erfolgt, bildet das Komponentenleitelement einen Verschluss aus, der einen Übertritt und/oder Austausch von zur Herstellung des Mischprodukts zu mischenden Komponenten und dadurch das Vermischen der Komponenten verhindert.

Bei der Relativdrehung des ersten Behälterteils und des zweiten Behälterteils in die Mischposition wird das Komponentenleitelement aufgrund seiner Festlegung an dem ersten Behälterteil und an dem zweiten Behälterteil und einer an dem Komponentenleitelement erzeugten Torsion in sich verdreht. Die Torsionswirkung verformt den Umfang des Komponentenleitelements derart, dass sich der Verschluss öffnet und ein Übertritt und/oder Austausch der zur Herstellung des Mischprodukts zu mischenden Komponenten, und dadurch das Vermischen der Komponenten, möglich ist. Der Mischeffekt kann dann durch händisches Schütteln des Mischbehälters hervorgerufen oder gesteigert werden.

Weiterhin muss der Mischbehälter bzw. müssen dessen außen liegende Behälterteile nicht verformt werden, um die mischbaren Komponenten miteinander zu vermischen, was einen hochwertigeren Gesamteindruck des Mischbehälters bedingt. Der Mischbehälter kann dann aus einem steifen Material wie einem Kunststoff oder aus Metall hergestellt werden, welches sich bei bestimmungsgemäßem händischen Gebrauch des Mischbehälters nicht verformt. Enthält der Mischbehälter beispielsweise ein Getränk, kann er insbesondere deswegen auch nach dem Verzehr des Getränks wiederverwendet werden.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist eine Wandung wenigstens eines der Behälterteile wenigstens teilweise derart transparent ausgeführt, dass der Inhalt der in dem betreffenden Behälterteil angeordneten Kammer von außen sichtbar ist. Damit kann beim Mischen der mischbaren Komponenten ein ansprechender optischer Effekt erzielt werden, wenn beispielsweise die in der von außen einsehbaren Kammer sichtbare Komponente bedingt durch die Mischung mit der anderen Komponente eine andere Farbe erhält, die dann von außen sichtbar ist. Bei einem ebenfalls von der Erfindung umfassten Mischprodukt sind hierzu insbesondere mischbare Komponenten unterschiedlicher Farbe vorgesehen, d.h. die erste Komponente des Mischprodukts weist eine in Bezug zur zweiten Komponente des Mischprodukts unterschiedliche Farbe auf, wobei sich beim Mischen der einzelnen Komponenten eine weitere, dritte Farbe ergibt.

Je nach Ausgestaltung des Komponentenleitelements kann die Relativdrehung zwischen der Ausgangsposition und der Mischposition beliebig sein, aber bevorzugt 90 Grad, 180 Grad oder 360 Grad, oder zwischen 90 Grad und einem Mehrfachen von 360 Grad betragen.

Insbesondere kann ein mit dem Mischbehälter verbundenes oder an ihn ansetzbares Auslassstück vorgesehen ist, welches mit einer der Kammern in Verbindung steht oder in Verbindung bringbar ist.

Dabei weist der rotationssymmetrische Körper insbesondere die Form eines Zylinders auf, insbesondere die Form einer zylindrischen Dose.

Besonders bevorzugt ist der Mischbehälter so ausgeführt, dass er in der Ausgangsposition und in der Mischposition die gleiche Außenform aufweist. Dies trägt ebenfalls zu einem ansprechenden optischen Erscheinungsbild bei.

Um ein unbeabsichtigtes Drehen bzw. Schieben der Behälterteile von der Ausgangsposition in die Mischposition zu verhindern, können zwischen den Behälterteilen wirkende Rast- und/oder Reibelemente vorgesehen sein, deren Rast- bzw. Reibwiderstand erst überwunden werden muss, um ein Drehen bzw. Schieben der Behälterteile von der Ausgangsposition in die Mischposition zu ermöglichen.
Vorteilhaft ist, wenn das Komponentenleitelement an seinem Umfang eine integral eingeformte Sollbruchstelle als einen Verschluss aufweist, dessen Materialstärke entlang seines Verlaufs über den Umfang des Komponentenleitelements geringer ist als die Materialstärke der übrigen Wandung des Komponentenleitelements. Dann genügt eine Verdrehung des Komponentenleitelements in sich, um den Verschlussbereich aufbrechen zu lassen und einen in dem Komponentenleitelement, das in diesem Fall einen dritten Behälterteil bildet, befindlichen Inhalt freizugeben.
Bevorzugt weist dazu das Komponentenleitelement an beidseitigen Stirnflächen desselben jeweils wenigstens zwei Ausformungen auf, die mit entsprechenden Ausformungen an den Wandungen des ersten Behälterteils und/oder der ersten Kammer und des zweiten Behälterteils und/oder der zweiten Kammer in verdrehfestem Eingriff stehen. Vorteilhaft kann in diesem Fall das Komponentenleitelement vollständig im Inneren des Mischbehälters angeordnet sein und durch Verdrehen außen liegender Behälterteile mit verdreht und geöffnet werden.
Der Mischbehälter ist bevorzugt ein portabler Mischbehälter, mit derartigen Abmessungen und einem derartigen Gewicht, dass er von einem Menschen leicht transportiert werden kann.
Wie bereits oben erwähnt, betrifft die Erfindung auch ein Mischsystem, beinhaltend einen oben beschriebenen Mischbehälter, wie im Anspruch 14 beansprucht. Die Verkaufsform des Mischsystems besteht dann in dem Mischbehälter, in dessen Kammern sich bereits die mischbaren bzw. zu mischenden Komponenten befinden und welcher sich im zum Verkauf vorgesehenen Zustand des Mischsystems in der Ausgangsposition befindet.
Eine besondere Beschränkung hinsichtlich der in den Kammern aufgenommenen bzw. aufnehmbaren Komponenten und/oder Zuschlagstoffe für das herzustellende Mischprodukt besteht hierbei nicht, solange diese miteinander zu einem gewünschten Endprodukt mischbar sind. Infrage kommen etwa flüssige, pulverförmige und/oder pastöse Stoffe und/oder Mittel oder Granulate, wie Lebensmittel, Pflegeprodukte für Körper und/oder Gegenstände, Harze, Klebstoffe, Farben und Lasuren, Reinigungsmittel, Schutzmittel, Emulsionen, Öle, Wachse, und dergleichen, jeweils in gleicher oder unterschiedlicher Farbe, Konsistenz und/oder Körnigkeit. Wenigstens eine der Kammern kann dabei auch eine vorgemischte, d.h. eine selbst wiederum aus mehreren Einzelkomponenten bestehende Mischsubstanz enthalten, die mittels des Mischbehälters zu einem Mehrkomponenten-Endprodukt mischbar oder in vorbestimmter Weise aktivierbar ist. Besonders bevorzugt sind die erste Komponente des Mischprodukts und die zweite Komponente des Mischprodukts flüssig. Für weiter bevorzugt ein Getränkeprodukt als Mischprodukt sind auf diese Weise vorteilhaft Mischgetränke wie Cocktails erzeugbar. Beispielsweise ist dann die eine mischbare Komponente ein alkoholhaltiges Grundgetränk, in welches ein flüssiger Zuschlagstoff wie beispielsweise ein Fruchtsaft eingemischt wird. Denkbar sind aber jegliche Formen von mischbaren Komponenten, beispielsweise auch eine feste Komponente in Pulver- oder Partikelform, die dann in die andere flüssige mischbare Komponente gemischt wird.

Identische bzw. gleich wirkende Bauteile und Baugruppen sind in den einzelnen Ausführungsformen jeweils mit denselben Bezugszahlen bezeichnet.

### Zeichnung

In der Zeichnung zeigt
- Fig.1: eine schematische perspektivische Darstellung eines portablen Mischbehälters als American Football;
- Fig.2a bis 2c: schematische perspektivische Darstellungen eines portablen Mischbehälters als American Football in verschiedenen Drehpositionen;
- Fig.3a, 3b: schematische perspektivische Darstellungen eines portablen Mischbehälters als zylindrische Dose in verschiedenen Drehpositionen;

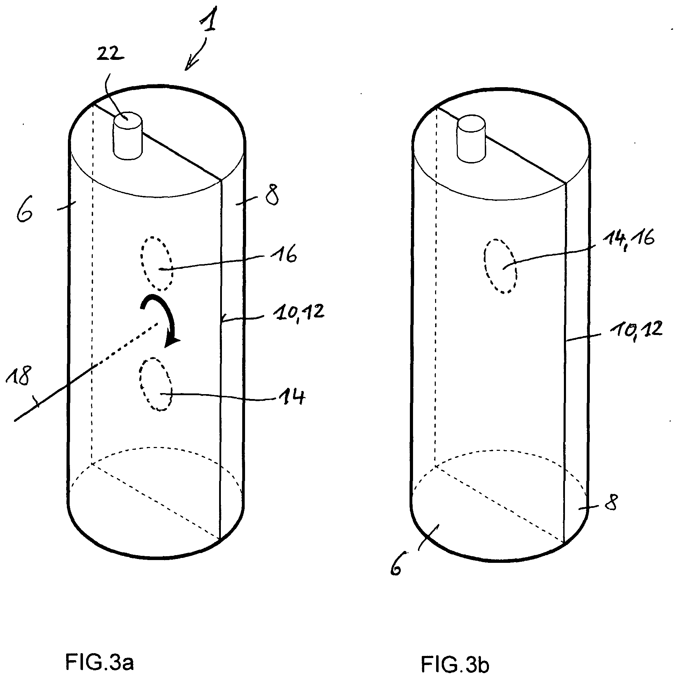

- Fig.4c bis 4c: schematische perspektivische Darstellungen eines portablen Mischbehälters nach den Fig. 3a, 3b als zylindrische Dose in verschiedenen Schiebe- und Drehpositionen;

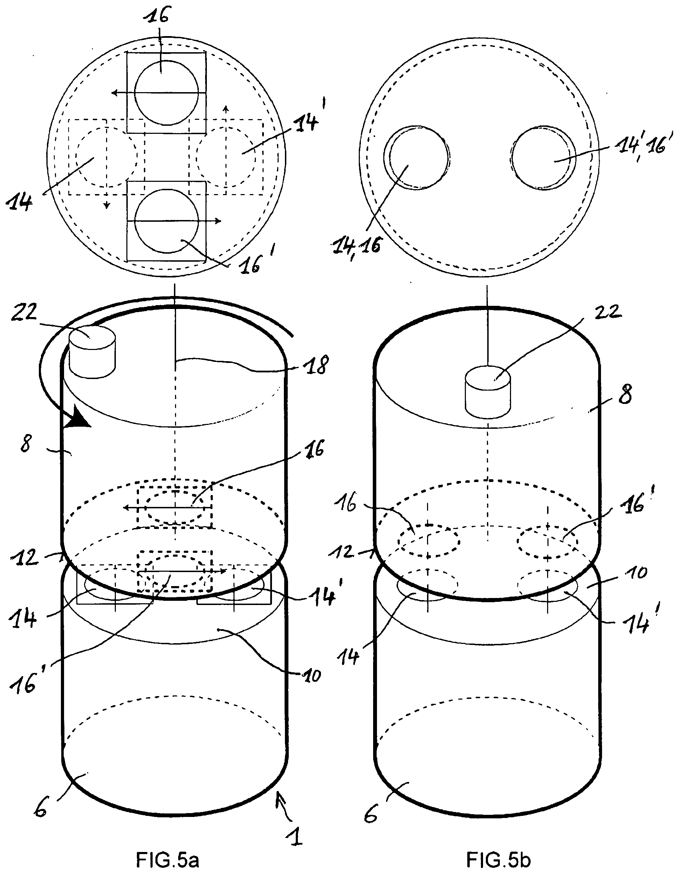

- Fig.5a, 5b: schematische perspektivische Darstellungen eines portablen Mischbehälters als zylindrische Dose in verschiedenen Drehpositionen;

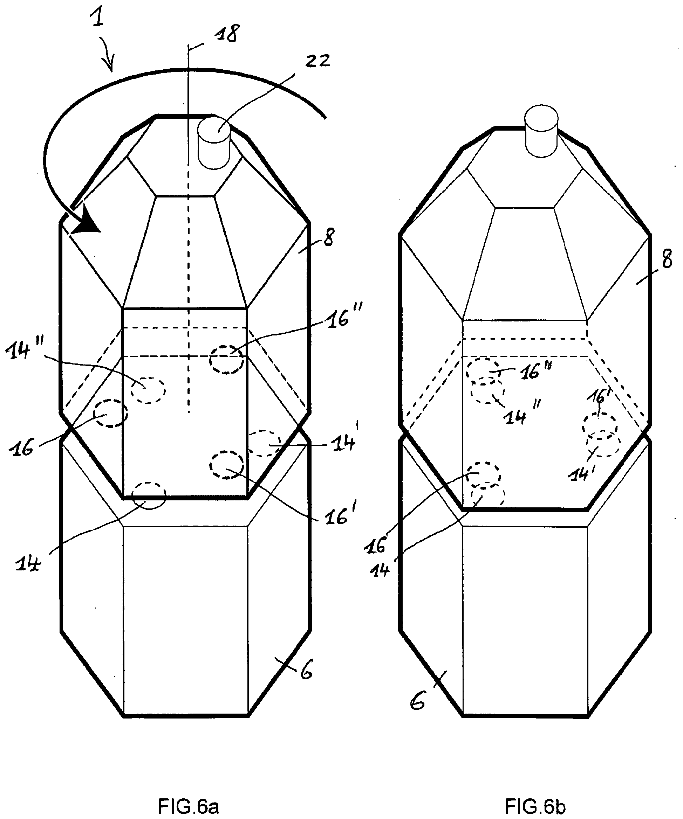

- Fig.6a, 6b: schematische perspektivische Darstellungen eines portablen Mischbehälters mit Polygonquerschnitt in verschiedenen Drehpositionen;

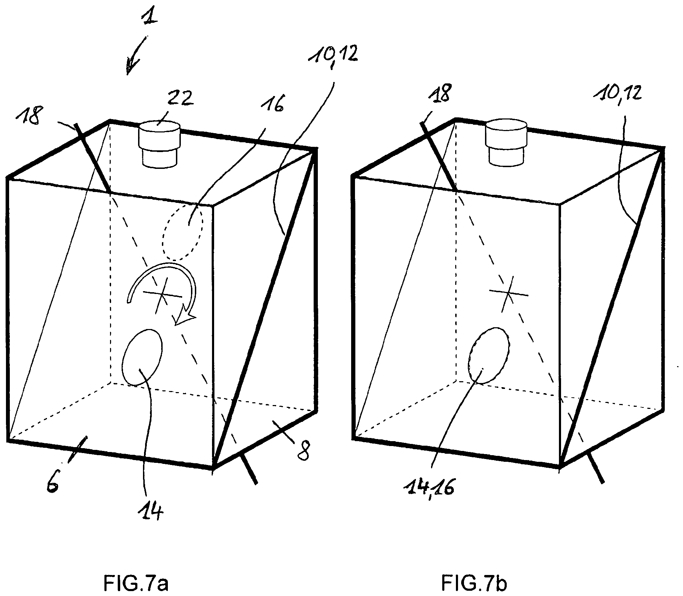

- Fig.7a, 7b: schematische perspektivische Darstellungen eines portablen Mischbehälters als Würfel in verschiedenen Drehpositionen.

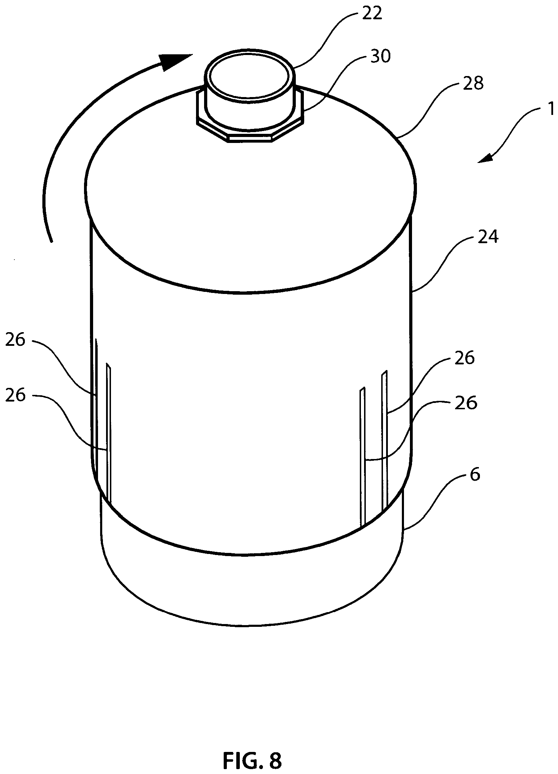

- Fig. 8: eine schematische perspektivische Darstellung eines portablen Mischbehälters als rotationssymmetrischer Körper, bei dem die Drehachse koaxial mit der Längsmittelachse des rotationssymmetrischen Körpers angeordnet ist;

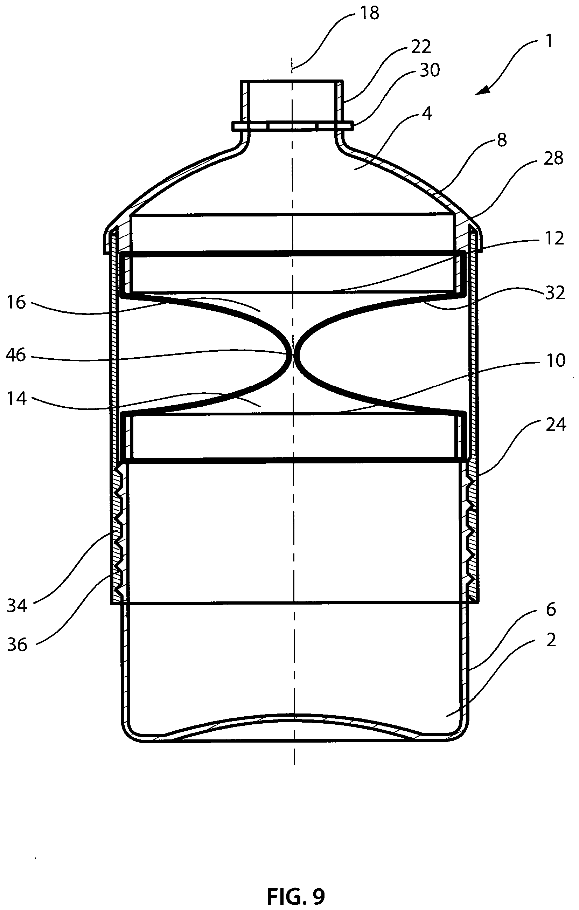

- Fig.9: einen schematischen Querschnitt mittig durch den portablen Mischbehälter nach Fig. 8;

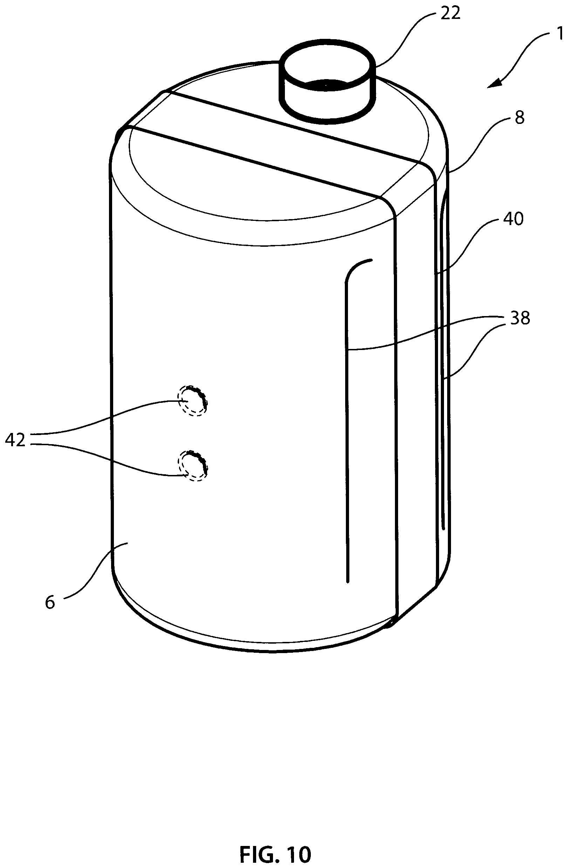

- Fig. 10: eine schematische perspektivische Darstellung eines portablen Mischbehälters gemäß einer bevorzugten Ausführungsform der Erfindung als rotationssymmetrischer Behälter, bei dem die Drehachse senkrecht zu der Längsmittelachse des rotationssymmetrischen Körpers angeordnet ist; und

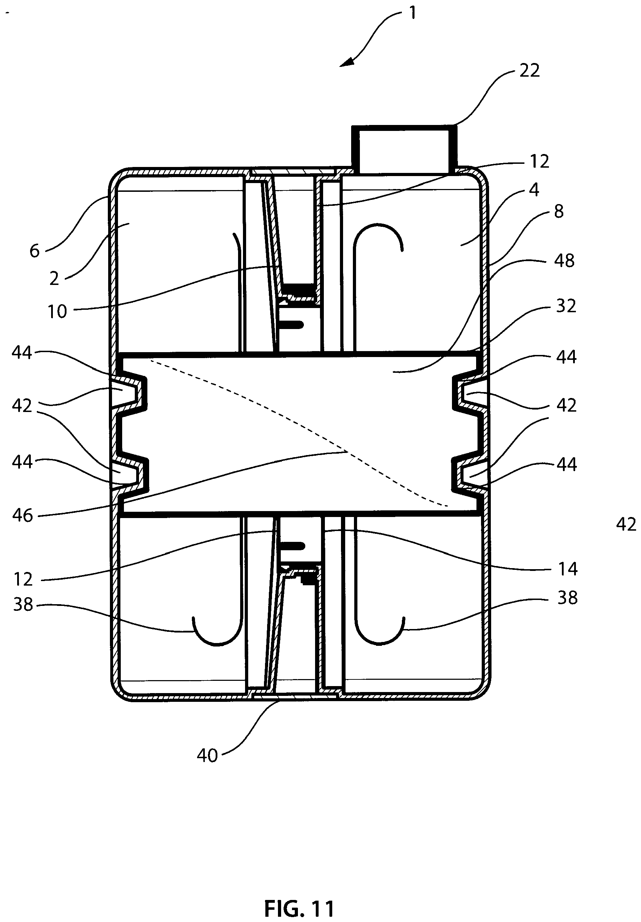

- Fig. 11: einen schematischen Querschnitt mittig durch den portablen Mischbehälter gemäß der Ausführungsform nach Fig. 10.

### Beschreibung der Ausführungsform

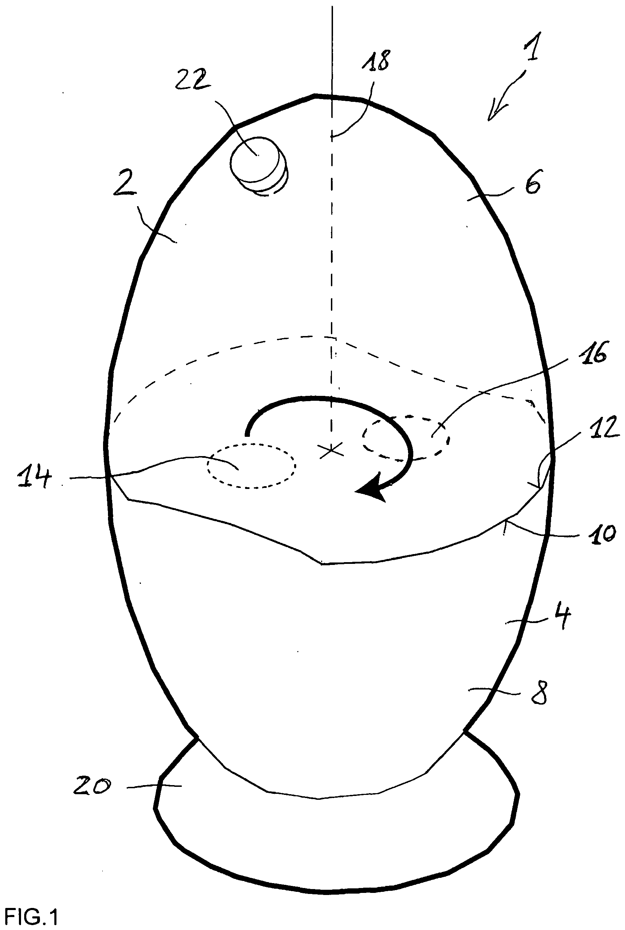

In Fig.1 ist einleitend beispielhaft eine schematische perspektivische Darstellung eines vorzugsweise portablen Mischbehälters 1 für ein Mischprodukt bzw. für dessen Mischung aus mehreren Einzelkomponenten oder Substanzen als American Football gezeigt. Als Mischprodukt kann beispielsweise ein aus mehreren Getränkekomponenten mischbares Getränk vorgesehen sein. Eine Beschränkung speziell auf Getränke besteht jedoch nicht.
Der portable Mischbehälter 1 weist hier beispielsweise zwei Kammern 2, 4 für verschiedene zur Fertigstellung des Getränks mischbare Komponenten auf. Eine in einem ersten Behälterteil 6 angeordnete erste Kammer 2 dient zur Aufnahme einer ersten Komponente des Getränks und eine in einem zweiten Behälterteil 8 angeordnete zweite Kammer 4 zur Aufnahme einer zweiten Komponente des Getränks. Dabei liegt eine erste Grenzfläche 10 des ersten Behälterteils 6 einer zweiten Grenzfläche 12 des zweiten Behälterteils 8 parallel direkt gegenüber, wobei die erste Kammer 2 wenigstens eine in die erste Grenzfläche 10 mündende erste Öffnung 14 und die zweite Kammer 4 eine in die zweite Grenzfläche 12 mündende zweite Öffnung 16 aufweist.
Es ist vorgesehen, dass das erste Behälterteil 6 und das zweite Behälterteil 8 in Bezug auf eine zur ersten Grenzfläche 10 und zur zweiten Grenzfläche 12 senkrechten Drehachse 18 durch Relativdrehung zueinander derart schwenkbar ausgebildet sind, dass die beiden Behälterteile 6, 8 ausgehend von einer in Fig.1 gezeigten Ausgangsposition, in welcher die erste Öffnung 14 und die zweite Öffnung 16 überlappungs- oder überdeckungsfrei sind (hier Drehversatz beispielsweise 180 Grad), in eine Mischposition schwenkbar sind, in welcher sich die erste Öffnung 14 und die zweite Öffnung 16 wenigstens teilweise überlappen oder überdecken, um zum Mischen der Getränkekomponenten eine Verbindung zwischen der ersten Kammer 2 und der zweiten Kammer 4 zu schaffen.

Das erste Behälterteil 6 ist hier beispielsweise eine obere Hälfte und das zweite Behälterteil 8 eine untere Hälfte des in Fig.1 stehend dargestellten American Football, der hier bodenseitig einen Standfuß 20 aufweist. Die Drehachse 18 ist hier beispielsweise koaxial mit der Mittellängsachse des American Football. Zur Drehachse 18 weisen die erste Öffnung 14 und die zweite Öffnung 16 einen identischen Abstand bzw. Radius auf. Verdreht wird hier vorzugsweise die obere Hälfte 6 gegenüber der mit einem Standfuß aufstehenden unteren Hälfte 8 des American Football.

Besonders bevorzugt kontaktieren sich die Behälterteile 6, 8 entlang der Grenzflächen 10, 12 so, d.h. mit einer gewissen hier axialen Vorspannung, dass eine Relativdrehung der Behälterteile 6, 8 möglich ist, aber keine Getränkekomponente über die Trennfuge nach außen fließen kann.

In der in Fig.1 gezeigten Ausgangsposition befinden sich die beiden Behälterteile 6, 8 in einer Drehposition, in welcher die erste, in Fig.1 gestrichelt dargestellte Öffnung 14 in Bezug zur zweiten, in Fig.1 gepunktet dargestellten Öffnung 16 um beispielsweise 180 Grad verdreht befindet. Somit können sich die erste Öffnung 14 und die zweite Öffnung 16 nicht überdecken bzw. sie befinden sich nicht in axialer Flucht zueinander.

Anhand Fig.1 ist nun leicht vorstellbar, dass bei einer durch den Pfeil in Fig.1 angedeuteten Relativdrehung des oberen ersten Behälterteils 6 gegenüber dem unteren zweiten Behälterteil 8 um 180 Grad in Bezug zur Drehachse 18 die erste Öffnung 14 in der ersten Grenzfläche 10 in Flucht zur zweiten Öffnung 16 in der zweiten Grenzfläche 12 gelangt. Durch die Überdeckung der beiden Öffnungen 14, 16 entsteht ein Strömungsquerschnitt zwischen der ersten Kammer 2 oben und der zweiten Kammer 4 unten, so dass die in der ersten Kammer 2 befindliche Getränkekomponente sich mit der in der zweiten Kammer 4 befindlichen Getränkekomponente mischen kann. Die Mischung der Getränkekomponenten kann durch Schütteln des Mischbehälters 1 unterstützt werden.

Wenigstens eine der Öffnungen 14, 16 kann in der Ausgangsposition von einem hier nicht gezeigten Verschlusselement verschlossen sein, insbesondere durch eine Folie, welches bedingt durch die Relativdrehung von der Ausgangsposition in die Mischposition von der Öffnung 14, 16 entfernt wird.

Alternativ oder zusätzlich kann wenigstens eine der Öffnungen 14, 16 von einem hier nicht gezeigten Dichtelement umgeben sein, beispielsweise von einem an ihrem Rand angeordneten Dichtring, welches mit der ersten Grenzfläche 10 und mit der zweiten Grenzfläche 12 in Kontakt steht. Das beispielsweise elastische Dichtelement liegt dann an den Grenzflächen 10, 12 stets kontaktierend an und verhindert, dass Getränkekomponenten entlang der Stoßfuge in der Trennebene zwischen der ersten Grenzfläche 10 und der zweiten Grenzfläche 12 nach außen fließen.

Zur Aufnahme des Getränks ist zusätzlich ist ein mit dem Mischbehälter 1 verbundenes Mundstück 22 vorgesehen ist, welches hier beispielsweise mit der ersten Kammer 2 im oberen, ersten Behälterteil 6 in Verbindung steht.

Um ein unbeabsichtigtes Drehen der Behälterteile 6, 8 von der Ausgangsposition in die Mischposition zu verhindern, können zwischen den Behälterteilen 6, 8 bzw. zwischen deren Grenzflächen 10, 12 wirkende, hier nicht gezeigte Rast- und/oder Reibelemente vorgesehen sein, deren Rast- bzw. Reibwiderstand erst überwunden werden muss, um ein Drehen der Behälterteile 6, 8 von der Ausgangsposition in die Mischposition zu ermöglichen.

Besonders bevorzugt ist die Wandung beispielsweise des unteren, zweiten Behälterteils 8 transparent ausgeführt, dass so der Inhalt der in dem zweiten Behälterteil 8 angeordneten zweiten Kammer 4 von außen sichtbar ist, insbesondere die Farbe der dort befindlichen zweiten Getränkekomponente bzw. des fertigen Mischgetränks nach der Mischung mit der ersten Getränkekomponente. Die Wandung des oberen, ersten Behälterteils 6 ist hingegen vorzugsweise nicht transparent.

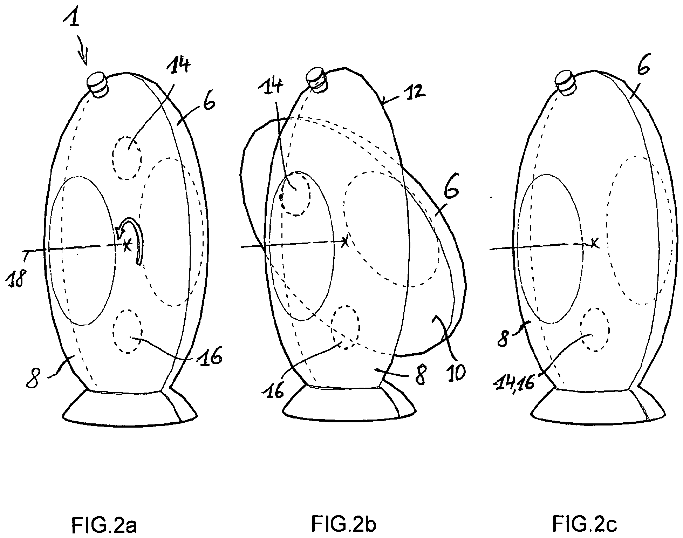

Der in den Figuren 2a bis 2c in verschiedenen Drehpositionen gezeigte Mischbehälter 1 hat gemäß einer weiteren Ausführungsform ebenfalls die Form eines American Football. Im Unterschied zu der Ausführungsform von Fig.1 ist die Drehachse 18 allerdings senkrecht zur Längsmittelachse angeordnet, wodurch die Grenzflächen 10, 12 der Behälterteile 6, 8 parallel zu einer vertikalen Ebene angeordnet sind. Fig.2a veranschaulicht dabei die Ausgangsposition mit um 180 Grad versetzt angeordneten Öffnungen 14, 16, Fig.2b eine Zwischenposition und Fig.2c die Mischposition mit sich überdeckenden bzw. sich in Flucht befindlichen Öffnungen 14, 16.

Bei der weiteren Ausführungsform von Fig.3a und 3b hat der Mischbehälter 1 die Form einer zylindrischen Dose, wobei die Drehachse 18 dort senkrecht zur Längsmittelachse angeordnet ist, wodurch hier die Grenzflächen 10, 12 der Behälterteile 6, 8 ebenfalls parallel zu einer vertikalen Ebene angeordnet sind.

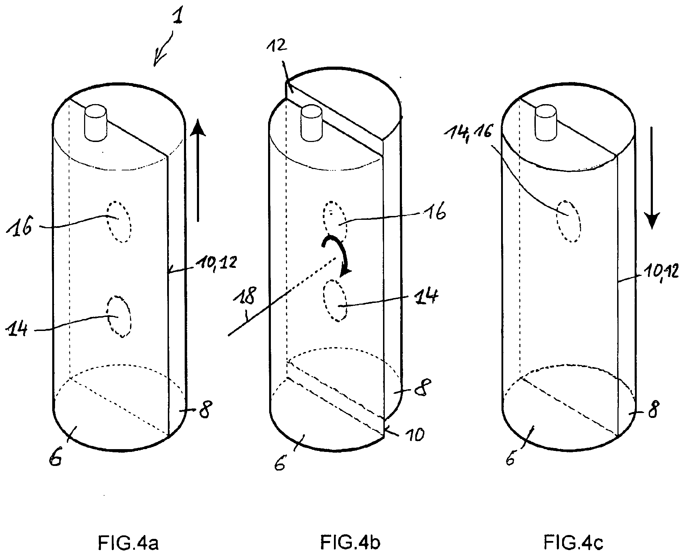

Bei der weiter in Fig.4a bis Fig.4c gezeigten Ausführungsform hat der Mischbehälter 1 ebenfalls die Form einer zylindrischen Dose, wobei zusätzlich zu einer Relativdrehung eine durch die vertikalen Pfeile symbolisierte Relativverschiebung der beiden Behälterteile 6, 8 beispielsweise entlang einer vertikalen Ebene erfolgen muss, damit die Öffnungen 14, 16 in Flucht zueinander kommen können. Dabei veranschaulicht Fig.4a die Ausgangsposition mit um 180 Grad versetzt angeordneten Öffnungen 14, 16, Fig.4b eine Zwischenposition, in der ein Behälterteil 8 gegenüber dem anderen Behälterteil 8 nach oben verschoben ist, und Fig.4c die Mischposition, in welcher das Behälterteil 8 nach seiner Drehung um 180 Grad wieder nach unten verschoben wurde, wobei sich dann die Öffnungen 14, 16 überdecken bzw. in Flucht befinden.

Es ist auch denkbar, dass eine Überdeckung der Öffnungen 14, 16 lediglich durch Relativverschiebung der Behälterteile 6, 8 zustande kommt, ohne dass eine Relativdrehung stattfindet.

Gemäß der in Fig.5a und 5b gezeigten, weiteren Ausführungsform sind die Grenzflächen 10, 12 in einer Trennebene angeordnet bzw. parallel zu dieser, die senkrecht zur Längsmittelachse des wiederum als zylindrische Dose ausgeführten Mischbehälters 1 ist, die auch die Drehachse 18 bildet. Weiterhin sind je Behälterteil 6, 8 zwei zueinander um 180 Grad versetzte Öffnungen 14, 14' und 16, 16' vorgesehen. Im vorliegenden Fall verkörpert Fig.5a die Ausgangsposition und Fig.5b die demgegenüber um hier 90 Grad verdrehte Mischposition.

Der Mischbehälter 1 gemäß der in Fig.6a und 6b gezeigten Ausführungsform ist wiederum ein rotationssymmetrischer Körper mit der Längsmittelachse als Drehachse 18, hier allerdings mit einem polygonalen Querschnitt und mit drei Öffnungen 14, 14', 14" bzw. 16, 16' 16" je Behälterteil 6, 8. Fig.6a zeigt die Ausgangsposition und Fig.6b die demgegenüber verdrehte Mischposition, wobei hier das zweite, obere Behälterteil 8 gegenüber dem unteren, ersten Behälterteil 6 verdreht wird.

Im Unterschied dazu stellt der Mischbehälter 1 nach der Ausführungsform von Fig.7a und Fig.7b einen Quader, insbesondere einen Würfel dar. Der Würfel ist dabei so in um die Drehachse 18 gegeneinander verdrehbare Behälterteile 6, 8 unterteilt, dass die Behälterteile 6, 8 bevorzugt den gleichen dreieckförmigen Querschnitt aufweisen und die Drehachse 18 senkrecht zu den Grenzflächen 10, 12 angeordnet ist. Fig.7a zeigt die Ausgangsposition und Fig.7b die Mischposition. Die Trennebene, entlang welcher sich die Grenzflächen 10, 12 parallel gegenüber liegen, stellt hier eine diagonale Ebene zwischen sich diagonal gegenüberliegenden Kanten des Quaders dar.

Wie bereits oben erwähnt, ist bevorzugt die Wandung wenigstens eines Behälterteils 6, 8 transparent ausgeführt, damit der Inhalt der betreffenden Kammer 2, 4 von außen sichtbar ist. Bevorzugt ist dann die Wandung der jeweils anderen Behälterteils 6, 8 nicht transparent ausgeführt.

Fig. 8 zeigt eine schematische perspektivische Darstellung eines portablen Mischbehälters 1 gemäß einer weiteren Ausführungsform als rotationssymmetrischer Körper, bei dem die Drehachse koaxial mit der Längsmittelachse des rotationssymmetrischen Körpers angeordnet ist.

Die äußere Form des portablen Mischbehälters gemäß dieser Ausführungsform wird durch ein erstes Behälterteil 6, einen Außenring 24 mit einem Durchmesser größer als der des ersten Behälterteils 6, ein Deckelteil 28, das oberseitig auf dem Außenring 24 aufliegt und diesen nach oben hin abschließt, und ein Auslassstück 22 bestimmt.

Der Außenring 24 weist unterseitig und entlang seines Umfangs verteilt eine Anzahl laschenartiger Ausformungen oder Laschen 26 auf, welche eine vorbestimmte Höhe aufweisen, d.h. sich auf einer vorbestimmten Länge von der Unterkante des Außenrings 24 in dessen Höhenrichtung erstrecken.

Die einzelnen Laschen 26 sind derart konfiguriert, dass sie in Verbindung mit einer noch zu beschreibenden Gewindeanordnung an dem erstem Behälterteil 6 und dem Außenring 24 eine Drehung des Außenrings 24 relativ zu dem ersten Behälterteil 6 nur in einer vorbestimmten Richtung, beispielsweise gegen den Uhrzeigersinn wie durch einen im Bereich des Deckelteils 28 gezeigten Pfeil angedeutet, erlauben.

Insoweit ist danach in der Ausgangsposition der Außenring 24 auf einer definierten Länge in Höhenrichtung des Mischbehälters 1 über die Gewindeanordnung auf das erste Behälterteil 6 aufgeschraubt. Das heißt, das erste Behälterteil 6 weist eine Gesamthöhe auf, die dem in Fig. 8 sichtbaren Teil des ersten Behälterteils 6 zuzüglich zumindest einer Höhe der Gewindeanordnung entspricht. Auf der Länge der Gewindeanordnung überdecken sich das erste Behälterteil 6 und der Außenring 24.

Das Deckelteil 28 liegt wie erwähnt auf dem Außenring 24 auf, d.h. der Außenring 24 ist unter dem Deckelteil 28 frei drehbar. Dazu kann beispielsweise das Auslassstück 22 einteilig an ein (in Fig. 8 nicht gezeigtes, weil von dem Außenring 24 verdecktes) zweites Behälterteil 8 angeformt sein, und kann das Deckelteil 28 bevorzugt mit einer Art Verschraubung, beispielsweise einer mit dem Auslassstück 22 in Eingriff stehenden Mutter, in einem Übergangsbereich zwischen dem Auslassstück 22 und dem zweiten Behälterteil 8 an diesen festgelegt sein.

Das Auslassstück 22 kann wie in Fig. 9 gezeigt mittig bzw. zentriert an dem Deckelteil 28 angeordnet sein. Eine Beschränkung hierauf besteht jedoch nicht. Auch ein grundlegend rotationssymmetrisch geformter Mischbehälter 1 kann das Auslassstück 22 beispielsweise zu einem Randbereich hin versetzt aufweisen, um beispielsweise das Ausgießen des Mischprodukts zu erleichtern oder tropffrei zu gestalten.

Fig. 9 zeigt einen schematischen Querschnitt mittig durch den portablen Mischbehälter 1 gemäß der Ausführungsform nach Fig. 8. Bezeichnungen, Definitionen und Entsprechungen, die bereits vorangehend beschrieben wurden, werden zweckmäßig nicht nochmals wiederholt, sind jedoch anhand der Darstellung und/oder der Bezugszeichen in Fig. 9 als solche identifizierbar und bilden bei Vorhandensein ebenfalls Teil des Mischbehälters 1 gemäß dieser Ausführungsform.

Eines der Kernelemente des Mischbehälters 1 dieser Ausführungsform ist ein drittes Behälterteil bzw. ein Komponentenleitelement 32, das als flexibles und/oder schlauchförmiges Hohlelement konfiguriert und zwischen das erste Behälterteil 6, den Außenring 24 und das zweite Behälterteil 8 gefügt ist und diese verbindet. Bevorzugt besteht das Komponentenleitelement 32 dabei aus einem Silikonmaterial bzw. einem Silikonschlauch vorbestimmter Länge.

Im Einzelnen ist das Komponentenleitelement 32 unter Verwendung einer geeigneten Verbindungstechnik, beispielsweise mittels einer Fügetechnik und/oder Verklebung, zum einen mit den Außenring 24 und dem oberen, zweiten Behälter 8 gefügt und an diesen festgelegt, und zum anderen mit dem unteren, ersten Behälter 6 gefügt und an diesem festgelegt.

Durch diese Art der Festlegung kann sich das Komponentenleitelement 32 bei einer Drehung von Außenring 24/zweitem Behälterteil 8 (gemeinsam) und erstem Behälterteil 6 relativ zueinander in einer Schließrichtung verdrillen, d.h. in etwa seinem Mittenbereich eine einen Verschluss ausbildende Einschnürung 46 erzeugen, die einen Öffnungsbereich mit einer oberen Öffnung 16 und einer unteren Öffnung 14 verschließt und dadurch das erste Behälterteil 6 mit der ersten Kammer 2 und das zweite Behälterteil 8 mit der zweiten Kammer 4 substanzdicht bzw. komponentendicht voneinander trennt.

Zur Verbesserung der Dichtwirkung der Einschnürung 46 kann darüber hinaus die Einbringung eines anwendungsbezogen unbedenklichen Zusatzmittels in den Trennbereich vorgesehen sein. Ein Beispiel für ein solches Zusatzmittel kann in einem lebensmitteltechnisch unbedenklichen Gel für den Fall eines Getränkeprodukts bestehen.

Demgegenüber kann sich das Komponentenleitelement 32 bei einer Drehung von Außenring 24/zweitem Behälterteil 8 (gemeinsam) und erstem Behälterteil 6 relativ zueinander in einer Öffnungsrichtung entdrillen, d.h. die in etwa seinem Mittenbereich ausgebildete Einschnürung 46 öffnen und somit den Öffnungsbereich mit der oberen Öffnung 16 und der unteren Öffnung 14 substanzdurchlässig bzw. komponentendurchlässig machen, d.h. das erste Behälterteil 6 bzw. die erste Kammer 2 und das zweite Behälterteil 8 bzw. die zweite Kammer 4 durchlässig miteinander verbinden.

In der Praxis entspricht der Schließzustand mit verdrilltem Komponentenleitelement 32 der Ausgangsposition, d.h. der Form, in der der Mischbehälter 1 mit getrennt gehaltenen, unvermischten Komponenten in jeweils der ersten und der zweiten Kammer 2, 4 beispielsweise lagernd gehalten oder zum Verkauf angeboten werden kann. Vorzugsweise ist in diesem Schließzustand das Komponentenleitelement 32 um wenigstens 180 Grad verdreht bzw. verdrillt, um die substanzdichte Einschnürung 46 auszubilden und die einzelnen Komponenten sicher zu trennen und/oder getrennt zu halten. Eine Beschränkung auf 180 Grad Verdrehung besteht jedoch nicht, material- und komponentenabhängig sind auch Verdrehungen bis zu einem Mehrfachen von 360 Grad denkbar.

Vorteilhaft entsteht durch die Verdrehung des Komponentenleitelements 32 in seinen Schließzustand eine Vorspannwirkung mit Rückstellkräften, die eine Rückdrehung in Öffnungsrichtung bis hin zu einer selbsttätigen Drehung in eine Öffnungsposition bzw. Mischposition zumindest unterstützt, so dass eine manuelle Führung der einzelnen Behälterteile 6 und 8 gegeneinander mit verringertem Kraftaufwand erfolgen oder gänzlich entfallen kann.

Beispielsweise kann/können dazu eine (nicht gezeigte) Banderole am Außenumfang des Mischbehälters 1 und/oder eine rastende Verriegelungsvorrichtung mit manueller Entriegelung als Verdrehsicherung vorgesehen sein, deren Entfernung durch beispielsweise Abreißen und/oder Betätigung eine selbsttätige Relativverdrehung der Behälterteile 6 und 8in die Mischposition zumindest einleitet.

Die Relativverdrehung der Behälterteile 6 und 8 aus der Ausgangsposition, in welcher die zu mischenden Komponenten durch die Einschnürung 46 mit Verschlusswirkung des Komponentenleitelements 32 voneinander getrennt vorgehalten werden, in die Mischposition, in der die Einschnürung 46 aufgehoben und ein Durchlass (in Fig. 9 in durchbrochener Linie angedeutet) zwischen dem ersten Behälter 6 bzw. der ersten Kammer 2 und dem zweiten Behälter 8 bzw. der zweiten Kammer 4 geschaffen ist, wird über eine Gewindeanordnung 34, 36, vorzugsweise ein Schraubgewinde, zwischen dem ersten Behälterteil 6 und dem Außenring 24 geführt.

Dazu weist das erste Behälterteil 6 außenseitig auf einer vorbestimmen Länge einen Gewindeabschnitt 36 auf, der mit einem innenseitig an dem Außenring 24 angebrachten Gewindeabschnitt 34 ebenfalls und/oder entsprechend vorbestimmter Länge in Eingriff steht. Eine in der Praxis zweckmäßige Gewindelänge wird im Wesentlichen von einer Dehnungsrate des für das Komponentenleitelement 32 verwendeten Materials, beispielsweise Silikon, und von dem für den Erhalt einer sicheren Verschlusswirkung notwendigen Verdrillweg bestimmt. Die Verdrillung bzw. Entdrillung des Komponentenleitelements 32 wird sodann durch Halten des ersten Behälterteils 6 und Verdrehen des Außenrings 24 relativ zu dem ersten Behälterteil 6 erhalten.

Da das Komponentenleitelement 32 an einem Ende, d.h. im Bereich der Öffnung 10 des ersten Behälterteils, nur mit dem ersten Behälterteil 6 und nicht mit dem Außenring 24 gefügt ist, und an dem anderen Ende, d.h. im Bereich der Öffnung 12 des zweiten Behälterteils, mit dem Außenring 24 und dem zweiten Behälterteil 8 gefügt ist, dreht sich bei einer Verdrehung des Außenrings 24 das zweite Behälterteil 8 und aufgrund der erzeugten Klemmwirkung das zwischen dem oberen Ende des Außenrings und dem zweiten Behälterteil 8 liegende Ende des Komponentenleitelements 32 mit, während das an das erste Behälterteil 6 gefügte andere Ende des Komponentenleitelements 32 mit diesem ortsfest verbleibt, so dass sich in Schließrichtung etwa mittig des Komponentenleitelements 32 die verschließende Einschnürung 46 ausbildet, und sich in Öffnungsrichtung eine bestehende Einschnürung 46 das Komponentenleitelement 32 öffnend zurückbildet.

In anderen Worten ist somit das an einer Wandung des ersten Behälterteils 6 und an einer Wandung des zweiten Behälterteils 8 festgelegte, in sich verformbare Komponentenleitelement 32 dazu angeordnet, in einer Ausgangsposition den Verschluss 46 auszubilden und sich bei der Relativdrehung des ersten Behälterteils 6 und des zweiten Behälterteils 8 in die Mischposition durch Verformung seiner Umfangswandung zu öffnen, bzw. den Verschluss 46 zu öffnen.

Vorteilhafte Weiterbildungen dieser Ausführungsform bestehen insbesondere darin, dass an zumindest einem Gewindegang der Gewindeabschnitte 34, 36 eine Sicherungseinrichtung gegen ein Zurückdrehen in Richtung Ausgangsposition angeordnet ist. Bei entsprechender Kennzeichnung wird dadurch sichergestellt, dass ein einmal geöffneter, d.h. in die Mischposition gebrachter, Mischbehälter 1 als solcher zu erkennen ist. Außerdem wird so in der Mischposition die Funktionalität eines gewohnten Behälters erhalten, so dass ein Benutzer nicht von einem plötzlichen Öffnen des von außen nicht ohne weiteres einsehbaren Komponentenleitelements 32 überrascht werden kann.

Alternativ oder zusätzlich kann darüber hinaus an in Öffnungsrichtung endseitigen Gewindegängen der Gewindeabschnitte 34, 36 eine Sicherungseinrichtung, beispielsweise nach Art eines Anschlags, gegen ein zu weites Drehen in die Öffnungsrichtung angeordnet sein. Ein zu weites Drehen in Öffnungsrichtung könnte beispielsweise das Komponentenleitelement 32 überdehnen und etwa zu Rissen in diesem oder gar zu dessen Abreißen führen, wodurch das Mischprodukt aufgrund nachlassender Dichtwirkung ungewollt aus dem Mischbehälter sickern oder der Mischbehälter zerstört werden könnte.

Weiter alternative und/oder zusätzliche Ausgestaltungen bilden die wenigstens eine Lasche 26 am Umfang des Außenrings 24 mit einem Eingriff in die Gewindeabschnitte 34, 36 derart, dass nur durch eine Drehung gegen den Uhrzeigersinn geöffnet werden kann, und/oder spezielle selbstsperrend bzw. selbsthemmend gezahnte und/oder gerasterte Ausformungen der Gewindeabschnitte 34, 36 derart, dass ein Drehen in Schließrichtung nicht möglich ist.

Fig. 10 zeigt eine schematische perspektivische Darstellung eines portablen Mischbehälters gemäß einer weiteren Ausführungsform als im Wesentlichen rotationssymmetrischer Behälter, bei dem die Drehachse senkrecht zu der Längsmittelachse des rotationssymmetrischen Körpers angeordnet ist.

Die äußere Form des portablen Mischbehälters gemäß dieser Ausführungsform wird durch ein erstes Behälterteil 6, ein Abdeckteil 40, ein zweites Behälterteil 8, wenigstens eine Griffmulde 38 in wenigstens einem der Behälterteile 6, 8, und ein Auslassstück 22 bestimmt.

In Fig. 10 ebenfalls angedeutet sind eine beispielsweise Lage und Form noch zu beschreibender Ausformungen 42 im Inneren der Behälterteile 6, 8 bzw. Kammern 2, 4.

Das Auslassstück 22 kann wie in Fig. 10 gezeigt dezentral an der Oberseite des zweiten Behälterelements angeordnet sein. In dieser Ausführungsform ist das Auslassstück 22 einstückig mit dem Behälterteil 8 ausgebildet. Eine Beschränkung hierauf besteht jedoch nicht. Das Auslassstück 22 kann anwendungsbezogen als separat anbringbares Element dargestellt sein, und auch ein grundlegend rotationssymmetrisch geformter Mischbehälter 1 kann das Auslassstück 22 beispielsweise zu einem Mittenbereich hin versetzt oder an einem anderen Behälterteil aufweisen, um beispielsweise das Ausgießen des Mischprodukts oder ein Trinken aus dem Mischbehälter bei einem Getränkeprodukt zu erleichtern.

Fig. 11 zeigt einen schematischen Querschnitt mittig durch den portablen Mischbehälter gemäß dieser Ausführungsform. Definitionen und Entsprechungen, die bereits vorangehend beschrieben wurden, werden zweckmäßig nicht nochmals wiederholt, sind jedoch anhand der Darstellung und/oder der Bezugszeichen in Fig. 11 als solche identifizierbar und bilden bei Vorhandensein ebenfalls Teil des Mischbehälters 1 gemäß dieser Ausführungsform.

Eines der Kernelemente des Mischbehälters 1 dieser Ausführungsform ist ein drittes Behälterteil bzw. Komponentenleitelement 32, das als separates, beispielsweise rundförmiges und im Ausgangszustand geschlossenes Kammerelement konfiguriert, im Inneren des Mischbehälters 1 koaxial zur Drehachse liegend angeordnet und an Behälterwandungen bzw. Kammerwandungen verdrehfest festgelegt ist. Bevorzugt kann das Komponentenleitelement 32 in dieser Ausführungsform aus demselben Material wie das erste Behälterteil 6 und das zweite Behälterteil 8 bestehen.

Im Einzelnen ist das Komponentenleitelement 32 eine rohrförmig und patronenartig geformte, im Ausgangszustand verschlossene Umhüllung eines vorbestimmten Volumens zur Aufnahme einer der zu mischenden Komponenten. Es weist insbesondere an seinem Umfang einen integral als Sollbruchstelle bzw. Sollbruchlinie in das Komponentenleitelement 32 eingeformten Verschluss 46 auf, dessen Materialstärke entlang seines Verlaufs über den Umfang des Komponentenleitelements 32 (In Fig. 11 in durchbrochener Linie angedeutet) geringer ist als die Materialstärke der übrigen Wandungen des Komponentenleitelements 32.

Ferner weist das Komponentenleitelement 32 an seinen beidseitigen Stirnflächen jeweils wenigstens zwei Ausnehmungen bzw. Ausformungen 44 auf, die als nach innen in das Komponentenleitelement 32 ragende Vertiefungen erzeugt sind. Bezogen auf eine Mitte des Mischbehälters 1 können die Ausformungen 44 beispielsweise kegelstumpfförmig konkav und damit kunststoffproduktions-technisch vorteilhaft herstellbar sein. Eine Beschränkung hierauf besteht jedoch dem Grunde nach nicht, insoweit eine zapfenförmige Doppelverankerung an Behälterteil und/oder Kammer im Behälter zur Kraftübertragung bereitgestellt wird.

Das Komponentenleitelement 32 ist im weiteren derart in dem Mischbehälter 1 eingelegt angeordnet, dass es an beiden seiner Enden bzw. Stirnflächen mit zu seinen Ausnehmungen 44 entsprechend angeordneten Ausformungen 42 an entsprechender Stelle der Wandung des ersten Behälterteils 6 und des zweiten Behälterteils 8 bzw. der ersten Kammer 2 und der zweiten Kammer 4 in Eingriff steht und verdrehfest festgelegt ist.

Verdrehfest festgelegt im verwendeten Sinne bedeutet, dass die Ausformungen 44 als Halterungen und Mitnehmer für das positionierte Komponentenleitelement 32 wirken und bei Drehung der ersten und zweiten Behälterteile 6, 8 die Stirnflächen des Komponentenleitelements 32 entsprechend mitdrehen, wobei an dieser Stelle eine starre und/oder spielfreie Verbindung zwischen den einzelnen Behälterteilen nicht erforderlich ist. Auf diese Weise bildet das Komponentenleitelement 32 auch gleichzeitig die Drehachse des Mischbehälters 1, um welche das erste Behälterelement 6 und das zweite Behälterelement relativ zueinander verdrehbar sind.

Zur wie in Fig. 11 gezeigten, horizontal gelagerten Anordnung des Komponentenleitelements 32 im Inneren des Mischbehälters 1 weisen das erste Behälterteil 6 und das zweite Behälterteil 8 weiter jeweils eine Öffnung 14 bzw. eine Öffnung 16 mit ausreichend großem Durchmesser zur Hindurchführung des Komponentenleitelements 32 auf. Vorteilhaft ist dabei der Durchmesser so ausreichend groß bemessen, dass mittig des Mischbehälters 1 ein großer, offener Bereich bereitgestellt ist, der eine gute Durchmischung der einzelnen Komponenten und einen guten Durchfluss zwischen den Behältern 6 und 8 in Ausgusshaltung derselben erlaubt.

An den Umfängen der Öffnungen 14 und 16 sind jeweils Schnapp- bzw. Rastverbindungsanordnungen (Clipsverbindungen) vorgesehen, an welchen wenigstens ein Dichtmittel (nicht gezeigt) angeordnet sein kann, und über welche das erste und das zweite Behälterteil 6, 8 substanzdicht miteinander verbindbar sind, beispielsweise durch stecken, clipsen, einrasten oder schnappen.

In anderen Worten rastet eine Projektion an einem der ersten bzw. zweiten Behälterteile 6, 8 im Bereich des Außenumfangs der Öffnungen 14, 16 in eine U-förmige Profilierung mit darin eingelegter und/oder angespritzter Dichtung an dem anderen der ersten bzw. zweiten Behälterteile 6, 8 ein und verbindet dadurch die beiden Behälterteile 6 und 8 substanzdicht, während die Behälterteilwandungen bzw. Kammerwandungen das Komponentenleitelement 32 an den Ausformungen 42/Ausnehmungen 44 halten und bei Verdrehung entsprechend mitnehmen. Mittels einer radial angeordneten Rastung (nicht gezeigt) an den Schnapp- bzw. Rastverbindungsanordnungen sind die Behälter nur in eine Richtung verdrehbar. Das Abdeckteil 40 deckt, beispielsweise in Form einer Banderole, den Verbindungsanordnungsbereich zwischen den beiden Behältern 6, 8 nach außen hin ab.

Anzumerken ist, dass in dieser Ausführungsform des Mischbehälters 1 das erste Behälterteil 6 und das zweite Behälterteil 8 über die Öffnungen 14, 16 mit größerem Durchmesser als der Außenumfang des Komponentenleitelements 32 in ständiger Verbindung miteinander stehen. Insoweit enthalten in dieser Ausführungsform beide Behälterteile 6, 8 bzw. beide Kammern 2, 4 dieselbe zu mischende Komponente, und wird der Zuschlagstoff in dem Komponentenleitelement 32 in dessen (in diesem Fall dritter) Kammer 48 gehalten.

Während des Übergangs von der Ausgangsposition in die Mischposition durch Verdrehung der Behälterteile 6, 8 relativ zueinander werden die beiden Stirnflächen des Komponentenleitelements 32 gegenläufig mitgenommen und verdreht. Aufgrund der dadurch auf das Komponentenleitelement 32 wirkenden Torsion reißt das Komponentenleitelement 32 entlang der Sollbruchlinie des Verschlusses 46, dessen Materialstärke geringer ist als die der übrigen Wandung, definiert auf, öffnet sich somit und gibt den Zuschlagstoff zur Vermischung in die erste und die zweite Kammer 2, 4 des ersten Behälterteils 6 und des zweiten Behälterteils 8 frei. Vorteilhaft kann dabei der Rissbereich entlang des Verschlusses 46 auf eine beidhändig einzügig durchführbare Drehung der Behälterteile von 180 Grad abgestimmt sein. Darüber hinaus kann ein Verdrehstop in Form beispielsweise eines Anschlags an wenigstens einem der Behälterteile 6, 8, 32, und vorzugsweise an den beiden Behälterteilen 6 und 8, für eine Begrenzung des Verdrehwegs auf maximal 180° Drehung angeordnet sein.

### Bezugszeichenliste

1 Mischbehälter
2 Kammer
4 Kammer
6 Behälterteil
8 Behälterteil
10 Grenzfläche
12 Grenzfläche
14 Öffnung
16 Öffnung
18 Drehachse
20 Standfuß
22 Mundstück, Auslassstück
24 Außenring
26 Lasche
28 Deckel
30 Verschraubung
32 Komponentenleitelement
34 Gewinde
36 Gewinde
38 Griffmulde
40 Abdeckteil
42 Ausformung
44 Ausformung
46 Einschnürung
48 Kammer

## Patentansprüche

1. Mischbehälter (1), der mehrere Kammern (2, 4, 48) für verschiedene zur Fertigstellung eines Mischprodukts mischbare Komponenten aufweist, wobei
a) wenigstens eine erste Kammer (2) zur Aufnahme einer ersten Komponente des Mischprodukts in einem ersten Behälterteil (6) und wenigstens eine zweite Kammer (4) zur Aufnahme der ersten Komponente des Mischprodukts in einem zweiten Behälterteil (8) und eine dritte Kammer (48) zur Aufnahme einer zweiten Komponente des Mischprodukts angeordnet ist,
b) das erste Behälterteil (6) und das zweite Behälterteil (8) durch Relativdrehung zueinander in eine Mischposition schwenk- und/oder drehbar sind, in der zum Mischen der Komponenten eine Verbindung zwischen der ersten Kammer (2) und der zweiten Kammer (4) und der dritten Kammer (48) hergestellt ist, wobei
c) der Mischbehälter durch einen rotationssymmetrischen Körper gebildet wird, wobei eine Drehachse (18) senkrecht zur Längsmittelachse des rotationssymmetrischen Körpers angeordnet ist, wobei
d) ein an wenigstens einer Behälterteilwandung festgelegtes, in sich verformbares Komponentenleitelement (32) vorgesehen ist, wobei
e) das in sich verformbare Komponentenleitelement (32) durch Verdrehung um die Drehachse (18) des rotationssymmetrischen Körpers verformbar ist, und wobei das Komponentenleitelement (32) an wenigstens einer Behälterteilwandung festgelegt ist, die sich senkrecht zu dieser Drehachse (18) erstreckt, und wobei
f) das Komponentenleitelement (32) die dritte und im Ausgangszustand geschlossene Kammer (48) ausbildet, im Inneren des Mischbehälters (1) koaxial zu dessen Drehachse (18) liegend angeordnet und an einer Wandung des ersten Behälterteils (6) und/oder der ersten Kammer (2) und einer Wandung des zweiten Behälterteils (8) und/oder der zweiten Kammer (4) verdrehfest festgelegt ist, und wobei
g) das Komponentenleitelement (32) dazu angeordnet ist, in einer Ausgangsposition die erste Kammer (2) und die zweite Kammer (4) einerseits und die dritte Kammer (48) andererseits komponentendicht voneinander zu trennen und sich bei der Relativdrehung des ersten Behälterteils (6) und des zweiten Behälterteils (8) in die Mischposition durch Verformung seiner Umfangswandung zu öffnen und die erste Kammer (2) und die zweite Kammer (4) einerseits und die dritte Kammer (48) andererseits komponentendurchlässig zu verbinden.

2. Mischbehälter nach Anspruch 1, **dadurch gekennzeichnet, dass** eine Wandung wenigstens eines der Behälterteile (6, 8) wenigstens teilweise derart transparent ausgeführt ist, dass der Inhalt der in dem betreffenden Behälterteil (6, 8) angeordneten Kammer (2, 4) von außen sichtbar ist.

3. Mischbehälter nach einem der vorhergehenden Ansprüche, **dadurch gekennzeichnet, dass** die Relativdrehung zwischen der Ausgangsposition und der Mischposition 90 Grad, 180 Grad oder 360 Grad beträgt.

4. Mischbehälter nach einem der vorhergehenden Ansprüche, **dadurch gekennzeichnet, dass** ein mit ihm verbundenes oder an ihn ansetzbares Auslassstück (22) vorgesehen ist, welches mit einer der Kammern (2, 4) in Verbindung steht oder in Verbindung bringbar ist.

5. Mischbehälter nach einem der vorhergehenden Ansprüche, **dadurch gekennzeichnet, dass** der rotationssymmetrische Körper die Form eines Zylinders aufweist.

6. Mischbehälter nach einem der vorhergehenden Ansprüche, **dadurch gekennzeichnet, dass** er so steif ausgeführt ist, dass er sich bei bestimmungsgemäßem Gebrauch nicht verformt.

7. Mischbehälter nach einem der vorhergehenden Ansprüche, **dadurch gekennzeichnet, dass** er so ausgeführt ist, dass er in der Ausgangsposition und in der Mischposition die gleiche Außenform aufweist.

8. Mischbehälter nach einem der vorhergehenden Ansprüche, **dadurch gekennzeichnet, dass** das Komponentenleitelement (32) aus einem Silikonmaterial besteht.

9. Mischbehälter nach einem der vorhergehenden Ansprüche, **dadurch gekennzeichnet, dass** das Komponentenleitelement (32) an seinem Umfang eine integral eingeformte Sollbruchstelle als einen Verschluss (46) aufweist, dessen Materialstärke entlang seines Verlaufs über den Umfang des Komponentenleitelements (32) geringer ist als die Materialstärke der übrigen Wandung des Komponentenleitelements (32).

10. Mischbehälter nach einem der vorhergehenden Ansprüche, **dadurch gekennzeichnet, dass** das Komponentenleitelement (32) an beidseitigen Stirnflächen desselben jeweils wenigstens zwei Ausformungen (44) aufweist, die mit entsprechenden Ausformungen (42) an den Wandungen des ersten Behälterteils (6) und/oder der ersten Kammer (2) und des zweiten Behälterteils (8) und/oder der zweiten Kammer (4) in verdrehfestem Eingriff stehen.

11. Mischbehälter nach einem der vorhergehenden Ansprüche, **dadurch gekennzeichnet, dass** eine erste Grenzfläche (10) des ersten Behälterteils (6) einer zweiten Grenzfläche (12) des zweiten Behälterteils (8) gegenüberliegt, wobei die erste Kammer (2) wenigstens eine in die erste Grenzfläche (10) mündende erste Öffnung (14) und die zweite Kammer (4) wenigstens eine in die zweite Grenzfläche (12) mündende zweite Öffnung (16) aufweist, und wobei die Drehachse (18) für die Relativdrehung der Behälterteile (6, 8) in Bezug auf die erste Grenzfläche (10) und die zweite Grenzfläche (12) senkrecht verläuft.

12. Mischbehälter nach Anspruch 11, **dadurch gekennzeichnet, dass** wenigstens eine der Öffnungen (14, 16) von wenigstens einem Dichtelement umgeben ist, welches mit der ersten Grenzfläche (10) und mit der zweiten Grenzfläche (12) in Kontakt steht.

13. Mischbehälter nach einem der vorhergehenden Ansprüche, **dadurch gekennzeichnet, dass** das Komponentenleitelement (32) die Drehachse (18) des Mischbehälters (1) bildet, um welche das erste Behälterteil (6) und das zweite Behälterteil (8) relativ zueinander verdrehbar sind.

14. Mischsystem, beinhaltend einen Mischbehälter nach einem der vorhergehenden Ansprüche, in dessen Kammern sich eine erste und eine zweite zu mischende Komponenten befinden.

15. Mischsystem nach Anspruch 14, **dadurch gekennzeichnet, dass** die erste Komponente des Mischprodukts eine in Bezug zur zweiten Komponente des Mischprodukts unterschiedliche Farbe aufweist.

16. Mischsystem nach Anspruch 14 oder 15, **dadurch gekennzeichnet, dass** die erste Komponente des Mischprodukts und die zweite Komponente des Mischprodukts flüssig sind.

17. Mischsystem nach Anspruch 14 oder 15, **dadurch gekennzeichnet, dass** die erste Komponente des Mischprodukts flüssig und die zweite Komponente des Mischprodukts partikel- oder pulverförmig ist.

18. Mischsystem nach einem der Ansprüche 14 bis 17, **dadurch gekennzeichnet, dass** das Mischprodukt ein Getränkeprodukt ist.

## Claims

1. A mixing container (1), comprising plural chambers (2), (4), (48) for various components that are mixable to produce a mix product, wherein
a) at least a first chamber (2) for receiving a first component of the mix product in a first container element (6) and at least a second chamber (4) for receiving the first component of the mix product in a second container portion (8) and a third chamber (48) for receiving a second component of the mix product are arranged,
b) the first container element (6) and second container element (8) are pivotable and/or rotatable relative to each other into a mixing position, wherein a connection between the first chamber (2) and the second chamber (4) and the third chamber (48) is provided in the mixing position for mixing the components, wherein
c) the mixing container is formed by a rotation symmetrical element, wherein a rotation axis (18) is arranged perpendicular to a longitudinal center axis of the rotation symmetrical element, wherein
d) a component guide element (32) is provided that is fixed at least at one container element wall and intrinsically deformable, wherein
e) the intrinsically deformable component guide element (32) is deformable by twisting it about the rotation axis (18) of the rotation symmetrical element, and wherein the component guide element (32) is fixed at least at one container element wall which extends perpendicular to the rotation axis (18), and wherein
f) the component guide element (32) forms the third chamber (48) that is closed in the starting position and is arranged in an interior of the mixing container (1) coaxial to a rotation axis (18) of the mixing container (1) and fixed against rotation at a wall of the first container element (6) and/or of the first chamber (2) and a wall of the second container element (8) and/or of the second chamber (4), and wherein
g) the component guide element (32) is arranged so that it separates in a starting position the first chamber (2) and the second chamber (4) on the one hand side and the third chamber (48) on the other hand side from each other component tight and so that upon a relative rotation of the first container element (6) and the second container element (8) into the mixing position the component guide element opens due to a deformation of its circumferential wall so that the component guide element connects the first chamber (2) and the second chamber (4) on the one hand side and the third chamber (48) on the other hand side to provide a component flow.

2. The mixing container according to claim 1, **characterized in that** a wall of at least one of the container elements (6, 8) is at least configured partially transparent so that a content of a chamber (2, 4) arranged in the respective container portion (6, 8) is visible from an outside.

3. The mixing container according to one of the preceding claims, **characterized in that** the relative rotation between the starting position and the mixing position is 90 degrees, 180 degrees, or 360 degrees.

4. The mixing container according to one of the preceding claims **characterized in that** an outlet piece (22) is provided that is connected with the mixing container or applicable to the mixing container, wherein the outlet piece is connected with one of the chambers, (2, 4) is connected or connectable with one of the chambers (2, 4).

5. The mixing container according to one of the preceding claims, **characterized in that** the rotation symmetrical body is shaped as a cylinder.

6. The mixing container according to one of the preceding claims, **characterized in that** the mixing container is stiff enough so that it does not deform when used as intended.

7. The mixing container according to one of the preceding claims, **characterized in that** the mixing container is configured so that it has an identical exterior shape in the starting position and in the mixing position.

8. The mixing container according to one of the preceding claims **characterized in that** the component guide element (32) is made from a silicon material.

9. The mixing container according to one of the preceding claims, **characterized in that** the component guide element (32) includes an integrally formed rated fracture joint forming a closure (46) at a circumference of the component guide element, wherein a material thickness of the closure along the circumference of the component guide element (32) is less than a material thickness of a remaining wall of the component guide element (32).

10. The mixing container according to one of the preceding claims, **characterized in that** the component guide element (32) respectively includes at least two shapes (44) at two faces of the component guide element wherein the two shapes (44) are in torque proof engagement with corresponding shapes (42) at walls of the first container element (6) and/or of the first chamber (2) and of the second container element (8) and/or of the second chamber (4).

11. The mixing container according to one of the preceding claims **characterized in that** a first boundary surface (10) of the first container element (6) is arranged opposite to a second boundary surface (12) of the second container portion (8), wherein the first chamber (2) includes at least a first opening (14) that opens into the first boundary surface (10) and the second chamber (4) includes at least a second opening (16) that leads into a second boundary surface (12), and wherein a rotation axis (18) for the relative rotation of the container elements (6, 8) extends vertically with respect to the first boundary surface (10) and the second boundary surface (12).

12. The mixing container according to claim 11, **characterized in that** at least one of the openings (14, 16) is enveloped by at least one seal element which is in contact with the first boundary surface (10) and the second boundary surface (12).

13. The mixing container according to one of the preceding claims, **characterized in that** the component guide element (32) forms the rotation axis (18) of the mixing container (1) about which the first container element (6) and the second container element (8) are rotatable relative to each other.

14. A mixing system, comprising the mixing container according to one of the preceding claims, wherein a first component to be mixed and a second component to be mixed are included in chambers of the mixing container.

15. The mixing system according to claim 14, **characterized in that** the first component of the mixing product has a different color than the second component of the mix product.

16. The mixing system according to claim 14 or 15, **characterized in that** the first component of the mix product and the second component of the mix product are liquid.

17. The mixing system according to claim 14 or 15, **characterized in that** the first component of the mix product is liquid and the second component of the mix product includes particles or is a powder.

18. The mixing system according one of the claims 14 through 17, **characterized in that** the mix product is beverage.

## Revendications

1. Réservoir de mélange (1) qui présente plusieurs compartiments (2, 4, 48) pour différents composants pouvant être mélangés pour la finalisation d'un produit mélangé, cependant
a) qu'au moins un premier compartiment (2) pour recevoir un premier composant du produit mélangé est placé dans une première partie du réservoir (6) et au moins un second compartiment (4) pour recevoir le premier composant du produit mélangé dans une seconde partie du réservoir (8) et un troisième compartiment (48) pour recevoir un second composant du produit mélangé,
b) la première partie du réservoir (6) et la seconde partie du réservoir (8) peuvent être pivotées et/ou tournées par rotation relative l'une par rapport à l'autre dans une position de mélange dans laquelle il est établi une connexion entre le premier compartiment (2) et le second compartiment (4) et le troisième compartiment (48) pour mélanger les composants, cependant que
c) le réservoir de mélange est formé par des corps à symétrie de rotation, un axe de rotation (18) étant placé perpendiculairement à l'axe médian longitudinal du corps à symétrie de rotation, cependant
d) qu'un élément de guidage des composants (32) déformable en soi, fixé sur au moins une paroi de partie de réservoir, est prévu, cependant que
e) l'élément de guidage des composants déformable en soi (32) est déformable par torsion autour de l'axe de rotation (18) du corps à symétrie de rotation et cependant que l'élément de guidage des composants (32) est fixé à au moins une paroi de partie de réservoir qui s'étend perpendiculairement à cet axe de rotation (18) et cependant que
f) l'élément de guidage des composants (32) forme le troisième compartiment (48) qui est fermé à l'état de départ, est placé dans l'intérieur du réservoir de mélange (1) en étant situé coaxial à l'axe de rotation (18) de celui-ci et étant fixé en étant résistant à la torsion sur une paroi de la première partie de réservoir (6) et/ou du premier compartiment (2) et sur une paroi de la seconde partie de réservoir (8) et/ou du second compartiment (4) et cependant que
g) l'élément de guidage des composants (32) est placé pour séparer, dans une position de départ, le premier compartiment (2) et le second compartiment (4) d'une part et le troisième compartiment (48) d'autre part en les rendant étanches aux composants et pour s'ouvrir, lors de la rotation relative de la première partie de réservoir (6) et de la seconde partie de réservoir (8) dans la position de mélange par déformation de sa paroi circonférentielle et pour relier le premier compartiment (2) et le second compartiment (4) d'une part et le troisième compartiment (48) d'autre part en les rendant perméables aux composants.

2. Réservoir de mélange selon la revendication 1, **caractérisé en ce qu'**une paroi d'au moins l'une des parties de réservoir (6, 8) est réalisée au moins partiellement transparente de manière que le contenu du compartiment (2, 4) placé dans la partie de réservoir concernée (6, 8) est visible de l'extérieur.

3. Réservoir de mélange selon l'une des revendications précédentes, **caractérisé en ce que** la rotation relative entre la position de départ et la position de mélange est de 90 degrés, de 180 degrés ou de 360 degrés.

4. Réservoir de mélange selon l'une des revendications précédentes, **caractérisé en ce qu'**il est prévu une pièce de sortie (22), reliée à celui-ci ou pouvant être rattachée à celui-ci, qui est en relation ou qui peut être mise en relation avec l'un des compartiments (2, 4).

5. Réservoir de mélange selon l'une des revendications précédentes, **caractérisé en ce que** le corps à symétrie de révolution présente la forme d'un cylindre.

6. Réservoir de mélange selon l'une des revendications précédentes, **caractérisé en ce qu'**il est réalisé si rigide qu'il ne se déforme pas en cas d'utilisation conforme.

7. Réservoir de mélange selon l'une des revendications précédentes, **caractérisé en ce qu'**il est réalisé tel qu'il présente la même forme extérieure dans la position de départ et dans la position de mélange.

8. Réservoir de mélange selon l'une des revendications précédentes, **caractérisé en ce que** l'élément de guidage des composants (32) est en un matériau à base de silicone.

9. Réservoir de mélange selon l'une des revendications précédentes, **caractérisé en ce que** l'élément de guidage des composants (32) présente, sur sa périphérie, un point destiné à la rupture moulé d'un seul tenant e comme une fermeture (46) dont l'épaisseur de matériau le long de ses contours sur la périphérie de l'élément de guidage des composants (22) est plus faible que l'épaisseur de matériau du reste de la paroi de l'élément de guidage des composants (32).

10. Réservoir de mélange selon l'une des revendications précédentes, **caractérisé en ce que** l'élément de guidage des composants (32) présente, sur les surfaces frontales des deux côtés de celui-ci, respectivement au moins deux conformations (44) qui sont en prise résistante à la torsion avec des conformations correspondantes (42) sur les parois de la première partie de réservoir (6) et/ou du premier compartiment (2) et de la seconde partie de réservoir (8) et/ou du second compartiment (4).

11. Réservoir de mélange selon l'une des revendications précédentes, **caractérisé en ce qu'**une première surface de délimitation (10) de la première partie de réservoir (6) est située en face d'une seconde surface de délimitation (12) de la seconde partie de réservoir (8), le premier compartiment (2) présentant au moins une première ouverture (14) qui débouche dans la première surface de délimitation (10) et le second compartiment (4) présentant au moins une seconde ouverture (16) qui débouche dans la seconde surface de délimitation (12) et l'axe de rotation (18) étant perpendiculaire à la première surface de délimitation (10) et à la seconde surface de délimitation (12) pour la rotation relative des parties de réservoir (6, 8).

12. Réservoir de mélange selon la revendication 11, **caractérisé en ce qu'**au moins l'une des ouvertures (14, 16) est entourée par au moins un élément d'étanchéité qui est en contact avec la première surface de délimitation (10) et avec la seconde surface de délimitation (12).

13. Réservoir de mélange selon l'une des revendications précédentes, **caractérisé en ce que** l'élément de guidage des composants (32) forme l'axe de rotation (18) du réservoir de mélange (1) autour duquel la première partie de réservoir (6) et la seconde partie de réservoir (8) peuvent se déplacer en rotation l'une par rapport à l'autre.

14. Système de mélange contenant un réservoir de mélange selon l'une des revendications précédentes dans les compartiments duquel il se trouve un premier et un second composant à mélanger.

15. Système de mélange selon la revendication 14, **caractérisé en ce que** le premier composant du produit mélangé présente une couleur différente du second composant du produit mélangé.

16. Système de mélange selon la revendication 14 ou 15, **caractérisé en ce que** le premier composant du produit mélangé et le second composant du produit mélangé sont liquides.

17. Système de mélange selon la revendication 14 ou 15, **caractérisé en ce que** le premier composant du produit mélangé est liquide et le second composant du produit mélangé est sous forme de particules ou de poudre.

18. Système de mélange selon l'une des revendications 14 à 17, **caractérisé en ce que** le produit mélangé est une boisson.
